# EUROPÄISCHE PATENTANMELDUNG

(11) **EP 1 367 184 A1**
(43) Veröffentlichungstag der Anmeldung: **03.12.2003**
(21) Anmeldenummer: 03010555.5
(22) Anmeldetag: 12.05.2003
(51) Int. Cl.: E03C 1/04, F16K 11/044

(54) **Wasserauslaufbatterie**

(30) Priorität: 23.05.2002 AT 7862002
(71) Anmelder: Gustav, Schmiedl, Armaturenfabrik Gesellschaft m.b.H. & Co. KG, 6060 Hall in Tirol (AT)
(72) Erfinder:
(74) Vertreter: Torggler, Paul Norbert, Dr.

(57) **Zusammenfassung**

Eine Wasserauslaufbatterie weist ein Armaturengehäuse (1) auf, an dem mindestens ein Zulauf (2) für Wasser, ein zur Füllung einer Badewanne oder dergleichen bestimmter Auslass und ein Anschlussstück (4) für einen Brauseschlauch oder dergleichen vorgesehen sind. Das Armaturengehäuse (1) enthält weiters ein Umstellventil (20), mittels dem das Wasser in einer ersten Stellung dem Auslass zur Badewanne und in einer zweiten Stellung dem Anschlussstück (4) für den Brauseschlauch zuleitbar ist, in der es durch den Druck des in das Anschlussstück (4) umgeleiteten Wassers gegen die Kraft einer Feder (13) in der zweiten Stellung festhaltbar ist. Ein äußeres Betätigungselement (15) des Umstellventils (20) ist durch das Anschlussstück (4) für den Brauseschlauch oder dergleichen gebildet.

## Beschreibung

Die Erfindung betrifft eine Wasserauslaufbatterie mit einem Armaturengehäuse, an dem mindestens ein Zulauf für Wasser, ein zur Füllung einer Badewanne oder dergleichen bestimmter Auslass und ein Anschlussstück für einen Brauseschlauch oder dergleichen vorgesehen sind, und mit einem ein äußeres Betätigungselement aufweisenden Umstellventil, mittels dem das Wasser in einer ersten Stellung dem Auslass und in einer zweiten Stellung dem Anschlussstück zuleitbar ist, wobei das Umstellventil durch den Druck des in das Anschlussstück umgeleiteten Wassers gegen die Kraft einer Feder in der zweiten Stellung festhaltbar ist.

Eine derartige Wasserauslaufbatterie ist beispielsweise der DE 37 13 296 A zu entnehmen. Das im allgemeinen mit einem Kalt- und Warmwasserzulauf ausgestattete Armaturengehäuse weist einen nach unten mündenden Wasserauslauf und einen nach unten mündenden Brauseschlauch-Anschlussstutzen auf, der durch den federbeaufschlagten Ventilkolben des Umstellventils verschlossen ist. An der Oberseite des Armaturengehäuses ist ein mit dem Ventilkolben verbundenes Betätigungselement angeordnet. Wenn das Wasser nicht in die Wanne, sondern über den Brauseschlauch ausfließen soll, so wird das Betätigungselement hochgezogen und der Ventilkolben öffnet den Zugang zum Brauseschlauch-Anschlussstutzen, wobei er den Zugang zum Wannenauslauf verschließt. Der Druck des in den Brauseschlauch fließenden Wassers ist üblicherweise größer als die Kraft der den Ventilkolben beaufschlagenden Feder, sodass das Umschaltventil solange in der zweiten Stellung verbleibt, solange durch den Brauseschlauch Wasser fließt, und unter der Wirkung der Feder in die erste Stellung zurückkehrt, sobald der Wasserzufluss abgesperrt wird. Dies stellt sicher, dass bei einer späteren Verwendung das Wasser nur durch den Wannenauslauf austritt.

Derartige Wasserauslaufbatterien sind üblicherweise jahrelang ohne Störungen zufriedenstellend in Verwendung, sodass der Benützer für eine Weiterentwicklung einen bestimmten Funktions- und Bedienungskomfort vorgibt. Eine hinsichtlich der Herstellung der Wasserauslaufbatterie wünschenswerte Weiterentwicklung betrifft den Bereich des Betätigungselementes. Es würde die Bearbeitung des Armaturengehäuses spürbar vereinfachen, wenn das Betätigungselement erübrigt werden könnte, da die hiefür notwendige zusätzliche Bohrung im Armaturengehäuse entfällt. Die Erfindung hat es sich nun zur Aufgabe gestellt, die Zusatzbohrung für das Betätigungselement einzusparen, ohne einen Bedienungskomfort hinnehmen zu müssen.

Erfindungsgemäß wird dies dadurch erreicht, dass das Betätigungselement des Umstellventils durch das Anschlussstück für den Brauseschlauch oder dergleichen gebildet ist.

Die erfindungsgemäße Wasserauslaufbatterie weist somit an der Oberseite kein Betätigungselement für das Umstellventil auf, und die zusätzliche Gehäusebohrung ist nicht notwendig. Weiters ergibt sich auch eine optische Verbesserung, da der Gesamteindruck der Wasserauslaufbatterie harmonischer erscheint. Der Betätigungskomfort bleibt hingegen unverändert, da für die Umschaltung auf Brause anstelle des Anhebens des Betätigungselementes der Brauseschlauch-Anschluss nach unten gezogen wird, und das Umstellventil in seine Ausgangsstellung für Wannenbefüllung zurückkehrt, sobald der Wasserzufluss abgesperrt wird.

In einer bevorzugten Ausführung ist dabei vorgesehen, dass das Umstellventil einen mit einem axialen Kanal versehenen, verschiebbaren Ventilkolben aufweist, der aus dem Armaturengehäuse vorsteht, und dass das Anschlussstück auf dem an dem Armaturengehäuse vorstehenden Ende des Ventilkolbens angeordnet ist.

Nachstehend wird nun die Erfindung an Hand der Figuren der beiliegenden Zeichnung näher beschrieben, ohne darauf beschränkt zu sein.

Es zeigen:
- Fig. 1: einen Schnitt durch den Umschaltbereich einer Wasserauslaufbatterie in der Stellung für Wannenbefüllung, und
- Fig. 2: einen Schnitt gemäß Fig. 1 in der Brausestellung.

Eine Wasserauslaufbatterie weist ein Armaturengehäuse 1 auf, in dem ein insbesondere mit einem Mischventil versehener Wasserzulauf 2, ein zu einem Wannenauslass führender Wasserablauf 3 und ein Anschlussstück 4 für einen Brauseschlauch vorgesehen sind. Ein Umstellventil 20 für die Umstellung des Strömungsweges umfasst einen Ventilkolben 10, der in einer von unten in das Armaturengehäuse 1 eingesetzten Kolbenführungshülse 7 axial verschiebbar angeordnet ist. Eine innerhalb des Armaturengehäuses 1 abgewinkelt verlaufende Trennwand zwischen dem Wasserzulauf 2 und dem Wasserablauf 3 weist eine Öffnung auf, in die das innere Ende der Kolbenführungshülse 7 eingesetzt ist. Der innere Abschnitt der Kolbenführungshülse 7 weist einen größeren Innendurchmesser auf, als der Außendurchmesser des Ventilkolbens 10, sodass ein Ringraum 17 verbleibt. Mindestens eine Öffnung 18 in der Kolbenführungshülse 7 stellt eine Strömungsverbindung in eine die Kolbenführungshülse 7 umgebende Ringkammer 6 her, an die der Wasserablauf 3 anschließt. Der Ventilkolben 10 weist einen axialen Kanal 11 auf und ist am inneren Ende mit einer Ventildichtung 12 und an dem aus der Kolbenführungshülse 7 nach unten ragenden äußeren Ende mit einem Betätigungselement 15 versehen, in das das Anschlussstück 4 für den Brauseschlauch integriert ist. Die Ventildichtung 12 liegt in einer an den Zulauf 2 anschließenden Ventilkammer 5, deren Höhe dem Verschiebeweg des Ventilkolbens 10 entspricht, und die einen ersten oberen Ventilsitz 8 für die Ventildichtung 12 aufweist. An der inneren Stirnfläche der Kolbenführungshülse 7 ist ein zweiter Ventilsitz 9 ausgebildet, an dem die Ventildichtung 12 in der zweiten Stellung des Ventilkolbens 10 anliegt. Zwischen der Kolbenführungshülse 7 und dem Ventilkolben 10 ist eine Feder 13 vorgesehen, die den Ventilkolben 10 nach oben und die Ventildichtung 12 in den ersten, oberen Ventilsitz 8 beaufschlagt, und von einer Federhülse 16 umgeben ist.

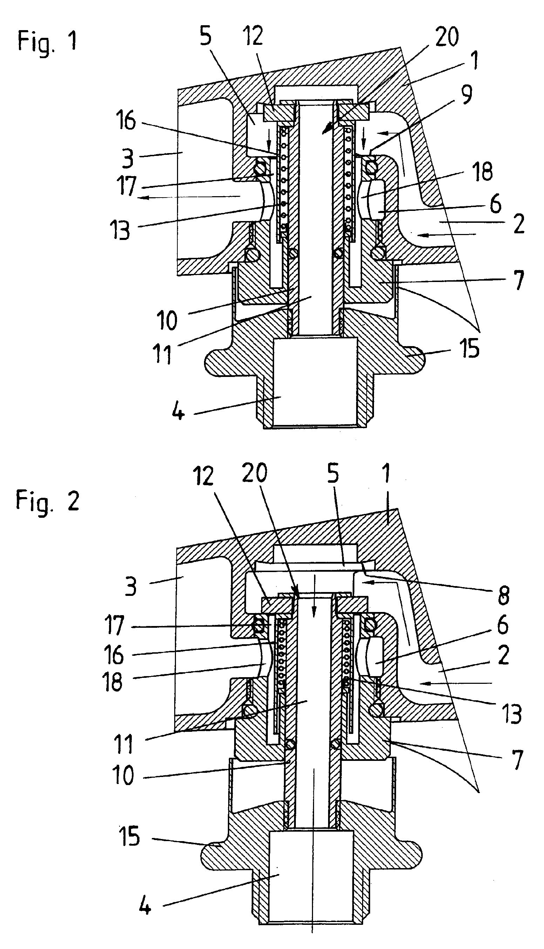

In der Stellung nach Fig. 1 fließt das Wasser nach Öffnen des nicht gezeigten Absperroder Mischventils durch den Zulauf 2 in die Ventilkammer 5. Der Ventilkolben 10 ist durch die Feder 13 in die obere Stellung verschoben, und die Ventildichtung 12 liegt im Ventilsitz 8, sodass der Weg in den axialen Kanal 11 im Ventilkolben 10 gesperrt ist. Da der Ventilsitz 9 frei ist, kann das Wasser in den Ringraum 17 eintreten und durch die Öffnungen 18 in die Ringkammer 6 und von dort über den Wasserablauf zum nicht gezeigten Wanneneinlauf fließen.

Die Feder 13 bringt im vorgespannten Zustand jene Kraft auf, die notwendig ist, um den Ventilkolben 10 mit dem Anschlussstück 4 und dem Brauseschlauch samt Wasserbefüllung im oberen Bereich zu halten. Da zum Zeitpunkt der Ventilöffnung noch zu wenig Staudruck vorhanden ist, bringt die Feder 13 weiters die Kraft für die Vorspannung der Ventildichtung 12 auf, um einen ungewollten Wasseraustritt in Richtung Brause zu verhindern. Danach wird die Dichtheit durch den eintretenden Staudruck unterstützt, der auf die Unterseite der Ventildichtung nach oben wirkt.

Um das Umstellventil 20 zu betätigen, wird das am freien unteren Ende des Ventilkolbens 10 angeordnete Betätigungselement 15, an dem das Anschlussstück 4 für den Brauseschlauch vorgesehen ist, nach unten gezogen, sodass die Stellung nach Fig. 2 erreicht wird. Das Wasser fließt somit nicht durch den Ringraum 17, der in dieser Stellung von der am Ventilsitz 9 an der Kolbenführungshülse 7 anliegenden Ventildichtung 12 gesperrt ist, sondern in den freiliegenden axialen Kanal 11 zum Anschlussstück 4 für den Brauseschlauch.

Die Ringfläche der Ventildichtung 12 ist so groß, dass der Staudruck des Wassers die Ventildichtung 12 gegen die Kraft der Feder 13 an den zweiten Ventilsitz 9 angepasst hält.

## Patentansprüche

1. Wasserauslaufbatterie mit einem Armaturengehäuse (1), an dem mindestens ein Zulauf (2) für Wasser, ein zur Füllung einer Badewanne oder dergleichen bestimmter Auslass und ein Anschlussstück (4) für einen Brauseschlauch oder dergleichen vorgesehen sind, und mit einem ein äußeres Betätigungselement (15) aufweisenden Umstellventil (20), mittels dem das Wasser in einer ersten Stellung dem Auslass und in einer zweiten Stellung dem Anschlussstück (4) zuleitbar ist, wobei das Umstellventil (20) durch den Druck des in das Anschlussstück (4) umgeleiteten Wassers gegen die Kraft einer Feder (13) in der zweiten Stellung festhaltbar ist, **dadurch gekennzeichnet, dass** das Betätigungselement (15) des Umstellventils (20) durch das Anschlussstück (4) für den Brauseschlauch oder dergleichen gebildet ist.

2. Wasserauslaufbatterie nach Anspruch 1, **dadurch gekennzeichnet, dass** das Umstellventil (20) einen mit einem axialen Kanal (11) versehenen, verschiebbaren Ventilkolben (10) aufweist, der aus dem Armaturengehäuse (1) vorsteht, und dass das Anschlussstück (4) auf dem an dem Armaturengehäuse (1) vorstehenden Ende des Ventilkolbens (10) angeordnet ist.
